# EUROPÄISCHE PATENTSCHRIFT

(11) **EP 2 510 767 B1**
(45) Veröffentlichungstag und Bekanntmachung des Hinweises auf die Patenterteilung: **28.02.2018**
(21) Anmeldenummer: 12163625.2
(22) Anmeldetag: 10.04.2012
(51) Int. Cl.: A01D 34/69

(54) **Einachsiges Fahrzeug**
Single axle vehicle
Véhicule à un seul essieu

(30) Priorität: 11.04.2011 DE 102011001940; 28.09.2011 DE 102011054025; 28.03.2012 DE 102012102679
(43) Veröffentlichungstag der Anmeldung: 17.10.2012
(73) Patentinhaber: Brielmaier, Martin, 88048 Friedrichshafen (DE)
(72) Erfinder: Brielmaier, Martin, 88048 Friedrichshafen (DE)
(74) Vertreter: Patentanwälte und Rechtsanwalt Weiß, Arat & Partner mbB

(56) Entgegenhaltungen:
- EP-A2- 1 985 487
- DE-A1- 1 457 922
- US-A- 5 077 959
- US-A1- 2004 031 629
- US-A1- 2006 070 365

## Beschreibung

### TECHNISCHES GEBIET

Die Erfindung betrifft ein einachsiges Fahrzeug nach den Merkmalen des Oberbegriffs des Anspruchs 1.

### STAND DER TECHNIK

Insbesondere im landwirtschaftlichen Bereich gibt es eine Vielzahl von Fahrzeugen, die erheblichen Anforderungen ausgesetzt sind. Diese Fahrzeuge werden oft in schwierigem Gelände eingesetzt, beispielsweise werden mit ihnen extremste Steigungen bearbeitet.

In diesem Zusammenhang wird auf die US 5,077,959 hingewiesen, welche eine handgesteuerte extra-weite Mähvorrichtung zeigt. Weiter wird auf die US 2006/0070365 A1 hingewiesen, welche einen Aufsitzmäher offenbart. Ausserdem wird auf die EP 1 985 487 A2 hingewiesen, welche einen anderen Aufsitzmäher offenbart. Weiter wird auf die DE 1 457 922 A1 hingewiesen, welche ein selbstfahrendes landwirtschaftliches Arbeitsgerät, insbesondere ein einachsiges Mähgerät offenbart. Der Vollständigkeit halber wird auf die US 2004/0031629 A1 hingewiesen, welche einen handgeführten Mäher aufzeigt.

Zu erwähnen sind vor allem handgeführte Einachser, wie beispielsweise Motormäher, Kreiselheuer, Bandrechen aber auch ausserhalb des landwirtschaftlichen Bereichs, beispielsweise Kehrmaschinen, Schneeräumer und Schneefräsen.

Für derartige Fahrzeuge sind maximal Lösungen bis 3,5 m Spannweite bekannt. Die Fahrzeuge weisen im Wesentlichen in der Mitte einen Führerstand, Räder bzw. die Radeinheit und einen Antrieb auf. Bei grösseren Spannweiten ergibt sich das Problem bzw. der Nachteil, dass die einachsigen Fahrzeuge, insbesondere Mäher leicht kippen bzw. wenn diese am Hang an Bodenunebenheiten, wie Hügeln, Maulwurfshügeln, Grasbüscheln oder Sträuchern hängenbleiben und aufgrund der dann entstehenden Hebelwirkung nicht mehr steuerbar sind.

### BESCHREIBUNG DER ERFINDUNG

Aufgabe der Erfindung ist es, ein einachsiges Fahrzeug, mit einer grösseren Spannweite zu schaffen, das stabil und sicher ist. Desweiteren soll das einachsige Fahrzeug, bzw. dessen Bauteile vielfältig einsetzbar sein.
Zur Lösung der Aufgabe führen die Merkmale des kennzeichnenden Teils des Anspruchs 1.
Mit einem einachsigen Fahrzeug ist im Folgenden ein Fahrzeug gemeint, dessen Räder oder Radeinheiten alle auf einer gemeinsamen Drehachse, liegen, wobei die gemeinsame Drehachse quer zu Fahrrichtung verläuft. In typischen Ausführungsbeispielen umfasst das einachsige Fahrzeug eine Mehrzahl von separaten und technisch voneinander getrennten Radeinheiten und/oder Antriebsachsen, die auf der gemeinsamen Drehachse liegen.
Ein einachsiges Fahrzeug, insbesondere für landwirtschaftliche Arbeiten, wie Mähen, Kreiseln und/oder Schwaden mit einem breiten Arbeitsgerät umfasst eine erste Radeinheit und eine zweite Radeinheit. Gemäss der Erfindung weist das Fahrzeug eine Breite auf, die grösser oder gleich 3,5 m ist. Vorzugsweise beträgt die Breite 6 m, insbesondere 12 m oder 12,5 m. Dadurch ergibt sich der Vorteil, dass sehr grosse Flächen innerhalb kürzester Zeit bearbeitet werden können. Gemäss der Erfindung sind die Radeinheiten jeweils endseitig an dem einachsigen Fahrzeug angeordnet. Dadurch ergibt sich der Vorteil, dass wenn das einachsige Fahrzeug mit seinem Arbeitsgerät bzw. einem äusseren Ende des Arbeitsgerätes an einem Hindernis hängen bleibt oder aufliegt, der Abstand bis zur Radeinheit relativ gering ist. Dadurch ergibt sich nur ein relativ kurzer Hebelweg, der zum Aufschaukeln oder Kippen des Fahrzeugs führen könnte.
In typischen Ausführungsbeispielen sind die Radeinheiten verschieblich oder veränderbar an dem Arbeitsgerät festlegbar. Dadurch ergibt sich der Vorteil, dass ein asymmetrischer Betreib möglich ist. Dadurch ergibt sich der Vorteil, dass die Radeinheiten so an dem Arbeitsgerät festgelegt werden können, dass das Arbeitsgerät an einer Seite einen Überstand über die Radeinheiten aufweist. Dies ist insbesondere dann vorteilhaft, wenn das Arbeitsgerät ein Mähbalken ist, weil sich dadurch auch die Möglichkeit ergibt über einer Wasserkante zu mähen. Dadurch, dass zwei Radeinheiten eingesetzt werden, ergibt sich der Vorteil, dass das Fahrzeug trotz der asymmetrischen Anordnung der Radeinheiten einen stabilen und sicheren Stand und Fahrverhalten aufweist.

In anderen Ausführungsbeispielen umfasst das Fahrzeug eine Radeinheit mit einem breiten Radstand. Bevorzugt weist der Radstand eine Länge auf, die 0% bis 40%, 5% bis 30%, 10% bis 20%, bevorzugt ca. 15% kürzer ist als eine Länge des Arbeitsgeräts. Gemäss der Erfindung umfasst das Arbeitsgerät zwei gleiche Teilarbeitsgeräte. Dadurch ergibt sich der Vorteil, dass das Arbeitsgerät als zwei Teilarbeitsgeräte sehr gut verlegbar und gut transportierbar ist. Dadurch, dass sich das Arbeitsgerät aus zwei gleichen Teilarbeitsgeräten, die auch einzeln verwendet werden können, zusammensetzen lässt, ergibt sich der Vorteil, dass die Herstellkosten relativ gering sind. Gemäss der Erfindung umfasst das Arbeitsgerät zwei ähnliche Teilarbeitsgeräte. Beispielsweise könne sich die Teilarbeitsgeräte in ihrer Länge unterscheiden. Dadurch ergibt sich der Vorteil, das unterschiedlich eigenständig Arbeitsgeräte als Teilarbeitsgeräte zu einem Arbeitsgerät kombiniert werden können. Gemäss der Erfindung ist jede der Radeinheiten eine Basismaschine, geeignet zur selbstständigen Verwendung. Gemäss der Erfindung umfasst das Arbeitsgerät zwei gleiche oder ähnliche Teilarbeitsgeräte .Vorzugsweise unterscheiden sich die Teilarbeitsgeräte in ihrer Breite. Gemäss der Erfindung treibt die erste Radeinheit das erste Teilarbeitsgerät und treibt die zweite Radeinheit das zweite Teilarbeitsgerät an. Dadurch ergibt sich der Vorteil, dass die erste Radeinheit und das erste Teilarbeitsgerät, und auch die zweite Radeinheit und das zweite Teilarbeitsgerät jeweils ein separates System bilden, die miteinander verbunden werden.
Vorteilhafterweise weist deshalb das erste Teilarbeitsgerät mit der ersten Radeinheit einen gemeinsamen Hydraulikkreislauf, Ölkreislauf, Schmierstoffkreislauf und/oder elektronischen Kreislauf auf. Dies gilt analog für die zweite Radeinheit. Dadurch ergibt sich der Vorteil, dass die Leitungen für die genannten Kreisläufe relativ kurz ausgebildet werden können. Dies ist insbesondere bei Hydraulikleitungen vorteilhaft. Gemäss der Erfindung weist das einachsige Fahrzeug ein Steuergerät auf, bevorzugt ist das Steuergerät geeignet zum Steuern der ersten Radeinheit und der zweiten Radeinheit. Dadurch ergibt sich der Vorteil, dass die zwei Radeinheiten über eine Software verbunden werden und nur von einer Station aus gleichzeitig bedient werden können. Besonders bevorzugt werden dann Funktionen der Radeinheit, die bei der Verwendung von zwei Radeinheiten unerwünscht oder unpraktisch sind, blockiert, beispielsweise die Möglichkeit bei einer Radeinheit mit zwei Rädern diese unabhängig voneinander anzutreiben.
Vorteilhafterweise ist die erste Radeinheit und/oder die zweite Radeinheit eine separate Einheit. Dadurch ergibt sich der Vorteil, dass sowohl die erste Radeinheit, wie auch die zweite Radeinheit in einer Kombination mit einer Vielzahl von Arbeitsgeräten kombiniert oder getrennt verwendet werden können. Ein Beispiel für eine solche Radeinheit ist bspw. der "Brielmaier Motormäher" oder der "Brielmaier Q1", oder ein Einachsgeräteträger oder eine Einachsbasisgerät.
Bevorzugt umfasst die Radeinheit ein Rad oder zwei Räder. Ausführungsbeispiele für ein Rad sind: Doppelreifen, Walze, Ketttenlaufrad, Stachelwalze und/oder Gitterrad. Dadurch ergibt sich der Vorteil, dass die Radeinheit auf die jeweiligen Bodenbeschaffenheiten angeglichen werden kann. Gemäss der Erfindung umfasst die erste Radeinheit und die zweite Radeinheit jeweils einen eigenen Antrieb. Bevorzugt werden als Antriebe Motoren mit einer Leistung von 12 PS bis 30 PS, bevorzugt 27 PS. Besonders bevorzugt werden Dieselmotoren eingesetzt. Denkbar sind aber auch Elektroantriebe.
Vorteilhafterweise erfolgt das Lenken des einachsigen Fahrzeugs über die Radeinheiten. Bevorzugt werden die Radeinheiten zum Fahren einer Kurve mit unterschiedlichen Drehzahlen angetrieben.

Bevorzugt umfasst das einachsige Fahrzeug eine Lenkeinrichtung für einen Bediener. Dadurch ergibt sich der Vorteil, dass ein Bediener, der hinter dem Fahrzeug hergeht, das Fahrzeug auf einfache Art und Weise bedienen kann.
In typischen Ausführungsbeispielen umfasst das einachsige Fahrzeug eine Steuereinrichtung, geeignet zum Empfangen von Daten, Speichern eines Vorprogramms und Steuern des Fahrzeugs in Abhängigkeit des Fahrprogramms und der Daten. Zweckmässigerweise ist dieses einachsige Fahrzeug dann auch ohne Bediener fahrbar.
Vorzugsweise dient eine Radeinheit bzw. ein Basisgerät als sog. "Master-Basisgerät", das von einem Bediener oder einer Software gesteuert wird. Die zweite Radeinheit, bzw. das Zweite Basisgerät ist vorzugsweise so mit der ersten Radeinheit bzw. der Steuereinheit verbunden, dass diese in Abhängigkeit der Steuerbefehle des Bedieners oder der Steuereinheit abgebremst und/oder beschleunigt wird, um die entsprechenden Bewegungen auszuführen.
Daten, die sich zum Steuern des Fahrzeugs eignen, sind bspw. GPS - Daten, das Erkennen von Kanten oder eingelernte Wege, in denen bspw. mit dem einachsigen Fahrzeug einmal der Umfang der zu bearbeitenden Fläche abgefahren wird. In Abhängigkeit dieser erfassten Daten wird dann mittels eines Fahrprogramms der Steuereinrichtung das Fahrzeug in Abhängigkeit des Fahrprogramms und der Daten selbsttätig, ohne Bediener gesteuert.

In typischen Ausführungsbeispielen eignet sich das Fahrzeug und/oder das Arbeitsgerät zum Anhängen an einen PKW. Bevorzugt wird das Fahrzeug und/oder das Arbeitsgerät so an einen PKW angehängt, dass seine Mittelachse quer zu einer Fahrrichtung des PKW liegt. Dadurch ergibt sich der Vorteil, dass das Arbeitsgerät auf einfach Art und Weise zu einer Arbeitsfläche transportiert werden kann.

Besonders bevorzugt weist das Fahrzeug eine Hebeeinrichtung auf, geeignet das Fahrzeug auf ein geeignetes Fahrgestelle zum Transport zu heben. Bevorzugt wird das Fahrzeug als Hebeeinrichtung eine Hydraulikeinrichtung auf, die auch andere Aufgaben ausführt und übernimmt.

In typischen Ausführungsbeispielen ist das Fahrzeug geeignet in eine Richtung zu fahren, die in einen Winkel zwischen 10° und 80° zu seiner Mittelachse liegt. Dadurch ergibt sich der Vorteil, dass das Fahrzeug als Kreiselschwader eingesetzt werden kann. Bevorzugt treibt jede der Radeinheiten einen Kreiselschwader an.

In typischen Ausführungsbeispielen ist das Arbeitsgerät flexibel, so dass es sich an das Gelände anpasst. Vorzugsweise ist das Arbeitsgerät ein Mähbalken. Bevorzugt erhält der Mähbalken seine Flexibilität dadurch, dass er Flachstahl umfasst und eine Länge über 6 m aufweist. Dadurch erhält der Mähbalken unerwarteter Weise eine Flexibilität, die die Anpassung an das Gelände ermöglicht. Vorzugsweise handelt es sich bei dem Mähbalken um einen Doppelmesser-Mähbalken.

Durch das erfindungsgemässe Fahrzuge können erhebliche Flächenleitungen erreicht werden.

Mit 5 Litern Benzin können 3 ha in einer Stunde gemäht werden. Wenn als Antrieb für jede der Radeinheiten ein 50 PS Dieselmotor eingesetzt wird können 18 ha pro Stunde bewirtschaftet werden. Das heißt, dass bei sehr geringen Investitionskosten im Vergleich zu herkömmlichen Landwirtschaftlichen Maschinen, insbesondere Traktoren mit 1 Liter Diesel als Treibstoff pro ha Einsparungen von 75% möglich sind.

In typischen Ausführungsbeispielen umfasst ein einachsiges Fahrzeug ein Laufrad. Dadurch ergibt sich der Vorteil, dass das einachsige Fahrzeug bessere Fahreigenschaften erhält. Bevorzugt wird das Laufrad eingesetzt, wenn das einachsige Fahrzeug ein Motormäher ist.

In typischen Ausführungsbeispielen ist das Laufrad in Fahrtrichtung vor dem Mähbalken angeordnet. Vorzugsweise ist das Laufrad so angeordnet, dass es über das Schnittgut bspw. Gras oder Heu rollt. Dadurch ergibt sich der Vorteil, dass verhindert wird, dass sich Schnittgut bspw. Gras oder Heu vor dem einachsigen Fahrzeug häuft und vor dem Fahrzeug hergeschoben wird.

Bevorzugt ist das Laufrad vor einem Ende des Mähbalkens angeordnet. Besonders bevorzugt ist an jedem Ende des Mähbalkens ein Laufrad angeordnet. Dadurch ergibt sich der Vorteil, dass an beiden Enden des Mähbalkens zuverlässig vermieden wird, dass sich Gras oder Heu oder anderes Schnittgut vor dem Mähbalken auftürmt.

In typischen Ausführungsbeispielen umfasst das einachsige Fahrzeug einen Laufschuh. Vorzugsweise ist der Laufschuh zumindest an einem seitlichen Ende des Arbeitsgeräts, insbesondere dem Mäher angeordnet. Dadurch ergibt sich der Vorteil, dass das Arbeitsgerät geführt wird. Bevorzugt ist das Laufrad vor dem Laufschuh angeordnet. Dadurch wird verhindert, dass sich Schnittgut bspw. Gras oder Heu vor dem Laufschuh häuft und vor dem Laufschuh und/oder dem Arbeitsgerät, insbesondere Mäher hergeschoben wird.

Besonders bevorzugt ist das Laufrad so angeordnet, dass es den Mähbalken auf einer bestimmten Höhe hält. Dadurch ergibt sich der Vorteil, dass der Mähbalken nicht in das Gras einsticht, sondern darüber hinweg gleitet.

### KURZE BESCHREIBUNG DER ZEICHNUNGEN

Nachfolgend wird die Erfindung anhand der beiliegenden Figuren kurz beschrieben,
Figur 1 zeigt eine schematische Darstellung einer Draufsicht eines erfindungsgemässen Motormähers;
Figur 2 zeigt eine schematische Darstellung einer Draufsicht eines weiteren Ausführungsbeispiels eines nicht-erfindungsgemässen Motormähers
Figur 3 zeigt eine schematische Darstellung einer Draufsicht eines weiteren Ausführungsbeispiel eines erfindungsgemässen Motormähers mit einem Laufrad;
Figur 4 zeigt eine schematische Darstellung einer Seitenansicht des Motormähers mit einem Laufrad nach Figur 3.

### AUSFÜHRUNGSBEISPIEL

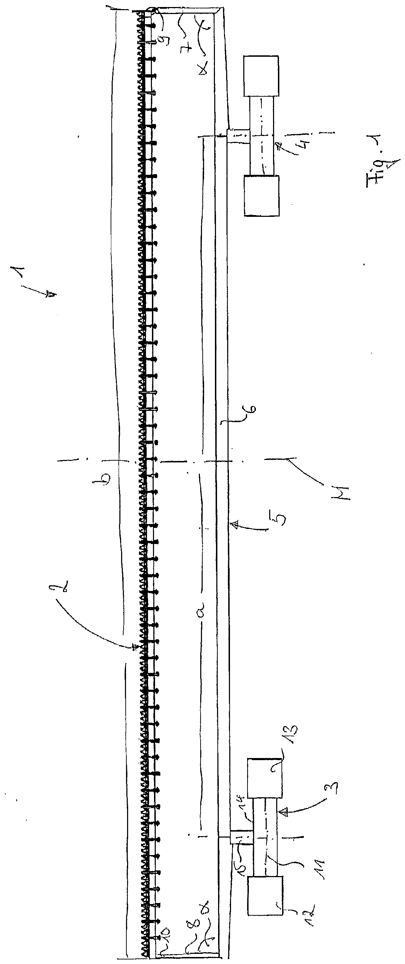

Figur 1 zeigt als erfindungsgemässes Fahrzeug einen Motormäher 1 mit einer Breite b grösser gleich 3,5 m auf. Der Motormäher 1 umfasst als Arbeitsgerät einen Mähbalken 2, mit einer Breite b und eine erste Radeinheit 3 und eine zweite Radeinheit 4.
Der Motormäher 1 weist eine Mittelachse M auf. Die erste Radeinheit 3 und die zweite Radeinheit 4 sind symmetrisch zu der Mittelachse M des Motormähers in einem Abstand a angeordnet. Die Radeinheiten 3 und 4 sind im Wesentlichen jeweils an einem Ende der Motormähers angeordnet.

Der Mähbalken 2 umfasst einen ersten Teilmähbalken 2.1 und einen zweiten Teilmähbalken 2.2. Jeder der Teilmähbalken 2.1 und 2.2 ist für sich eine eigenständiges Arbeitsgerät, dass mit einer Radeinheit als Motormäher mit geringerer Breite eingesetzt werden kann.

In typischen Ausführungsbeispielen weist der erste Teilmähbalken eine Länge bzw. eine von 6 m und der zweite Teilmähbalken eine Länge von 6,5 m auf.

Die erste Radeinheit 3 treibt den ersten Teilmähbalken 2.1 an. Die zweite Radeinheit 4 treibt den zweiten Teilmähbalken 2.2 an. Der Teilmähbalken 2.1 weist bevorzugt einen separaten nicht dargestellten Hydraulikkreislauf auf. Der Teilmähbalken 2.2 weißt ebenfalls einen separaten nichtdargestellten Hydraulikkreislauf auf.

Des weiteren umfasst der Motormäher 1 einen Rahmen 5, der den Mähbalken 2 mit den Radeinheiten 3 und 4 verbindet. Der Rahmen 5 umfasst einen Querträger 6, an dem die erste Radeinheit 3 und die zweite Radeinheit 4 befestigt sind. Der Querträger 6 weist in etwa eine Breite b auf, die der Breite b des Mähbalkens 2 entspricht. Bevorzugt ist der Rahmen 5, insbesondere dessen Querträger so ausgebildet, dass er geteilt und/oder geklappte werden kann. Dadurch ergibt sich der Vorteil, dass der Motormäher gut transportiert werden kann. Der Rahmen 5 umfasst einen ersten Haltearm 7 und einen zweiten Haltearm 8. Die Haltearme 7 und 8 ragen jeweils an einem Ende des Querträgers 6 in Richtung der den Radeinheiten 3 und 4 abgewandten Seite. Im vorliegenden Ausführungsbeispiel schliessen die Haltearme 7 und 8 mit dem Querträger 6 einen Winkel α ein, der in etwa 30° bis 120° beträgt, bevorzugt 90°.

An einem Endpunkt 9 des Haltearms 7 und einem Endpunkt 10 des Haltearms 8, die von dem Querträger 6 abgewandt sind, ist der Mähbalken 2 befestigt.
Im dargestellten Ausführungsbeispiel nach Figur 1 ist der Mähbalken 2 mit seinen Enden an den Endpunkten 9 und 10 der Haltearme 7 und 8 befestigt.

Im weiteren, nicht dargestellten Ausführungsbeispielen kann der Mähbalken mit seinen Enden auch ein Stück weit, bevorzugt 100 mm bis 300 mm seitlich über die Haltearme 7 und 8 hinausragen.

Die erste Radeinheit 3 ist im Wesentlichen analog zu der zweiten Radeinheit 4 aufgebaut. Im Folgenden wird deshalb nur die Ausgestaltung der ersten Radeinheit 3 ausführlich beschrieben.

Die Radeinheiten 3 und 4 sind jeweils separate Antriebseinheiten, die auch einzeln mit anderen Arbeitsgeräten oder nur einem Teilmähbalken 2.1 oder 2.2 eingesetzt werden können. Bevorzugt sind die Radeinheiten über ein Steuergerät softwaretechnisch verbunden.

Die erste Radeinheit 3 umfasst eine Achse 11, die ein erstes Rad 12 und ein zweites Rad 13 verbindet. Die Achse 11 ist von einem Gehäuse 14 umschlossen. Das Gehäuse 14 ist über ein Verbindungselement 15 mit dem Rahmen 5 verbunden. In oder an dem Gehäuse 14 ist auch ein nicht dargestellter Antrieb aufgenommen. Der nicht dargestellte Antrieb treibt die Radeinheit 3 an. Die Radeinheit 4 umfasst analog einen eigenen Antrieb.

In weiteren, nicht dargestellten Ausführungsbeispielen umfasst die Radeinheit nur ein Rad.

Ausführungsformen des Rads oder der Räder der Radeinheit sind: Luftreifen, Vollgummireifen, Zwillingsrad, Gitterrad, Walze, Stachelwalze, Kettenantrieb.

Weitere typische Ausführungsbeispiele weisen Kombinationen der genannten Ausführungsformen des Rads auf.
Bevorzugt umfasst der Motormäher 1 eine nicht dargestellte Steuerungseinheit, die geeignet ist, Umgebungsdaten, wie Geländebeschaffenheit, Grashöhe und/oder GPS Daten zu empfangen und/oder zu ermitteln. Besonders bevorzugt umfasst die Steuerungseinheit eine Speichereinheit, mit Algorithmen und/oder Programmen, zum Steuern des Motormähers. Noch bevorzugter erfolgt die Steuerung des Motormähers in Abhängigkeit der empfangenen und/oder ermittelten Umgebungs- und/oder GPS-Daten.
Im weiteren, nicht dargestellten Ausführungsbeispielen umfasst der Motormäher 1 eine Lenkeinreichung für einen Bediener, der hinter dem Motormäher 1 hergeht. Die Lenkeinrichtung ist dann etwa im Bereich der Mittelachse M angeordnet, wie bei bekannten einachsigen Fahrzeugen bzw. Motormähern mit kleinerer Spannweite. Die Lenkeinrichtung umfasst bevorzugt Bedienelemente für Gas, Bremse, Start und Stopp des Mähbalkens bzw. des Arbeitsgeräts.

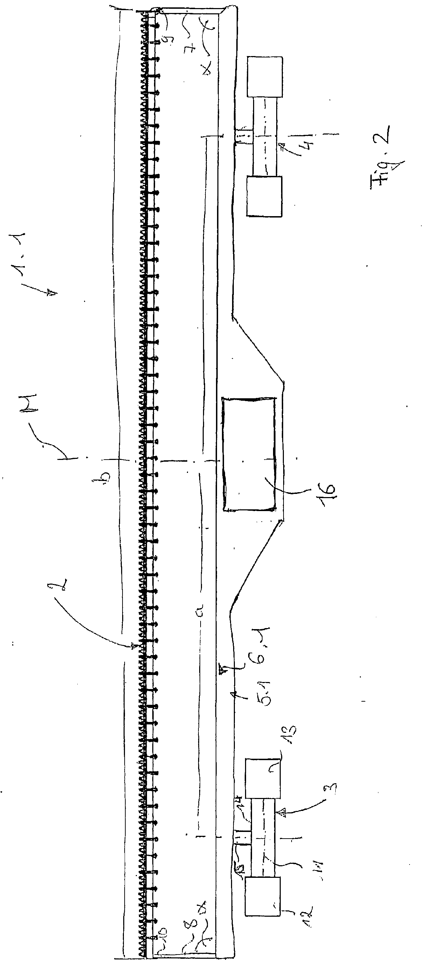

Figur 2 zeigt ein weiteres nicht-erfindungsgemässen Ausführungsbeispiel eines Motormähers 1.1. Bei dem Motormäher 1.1 werden die Radeinheiten 3 und 4 über einen gemeinsamen Antrieb 16 angetrieben. Über nicht dargestellte Getriebeelemente, die bevorzugt in einem Querträger 6.1 eines Rahmens 5.1 verlaufen, wird die Antriebsbewegung des Antriebs 16 auf die Radeinheiten 3 und 4 übertragen. Der Mähbalken 2 umfasst ebenfalls die separaten Teilmähbalken 2.1 und 2.2.
In nicht dargestellten Ausführungsbeispielen ist ein Mähbalken einstückig ausgebildet.
In weiteren, nicht dargestellten Ausführungsbeispielen, ist an dem Antrieb des Ausführungsbeispiels nach der Figur 2 eine Lenkeinrichtung für einen Bediener, der hinter dem Motormäher hergeht, vorgesehen.

In weiteren nicht dargestellten Ausführungsbeispielen umfasst der Motormäher vorzugsweise an den Enden des Mähbalkens jeweils einen Laufschuh, um den Mähbalken besser zu führen.

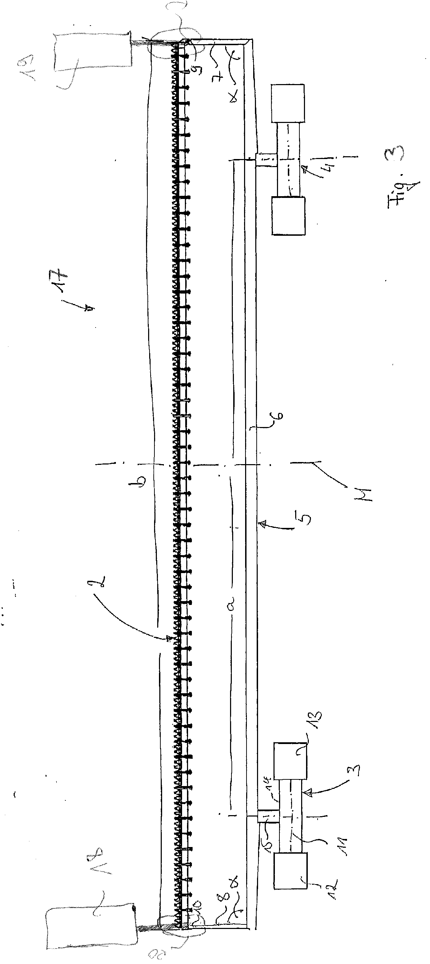

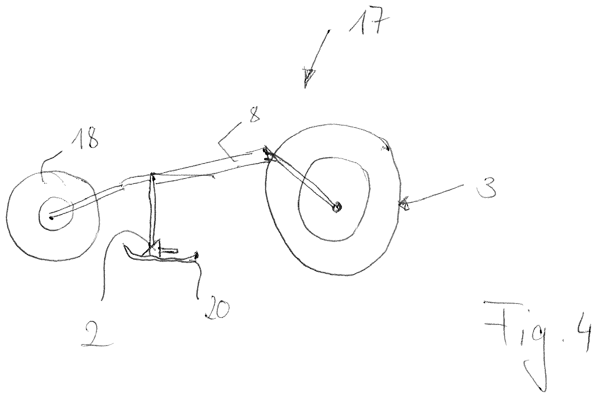

Die Figuren 3 und 4 zeigen ein weiteres Ausführungsbeispiel eines Motormähers 17. Der Motormäher 17 ist im wesentlichen analog zu dem Motormäher 1 ausgebildet.

Der Motormäher 17 umfasst zwei Laufräder 18 und 19. Die Laufräder 18 und 19 sind vor dem Mähbalken 2 in Fahrtrichtung angeordnet. Die Laufräder 18 und 19 sind jeweils an einem Ende des Mähbalkens 2 angeordnet.

Der Motormäher 17 umfasst zwei Laufschuhe 20 und 21. Die Laufschuhe 20 und 21 sind jeweils an einem Ende des Mähbalkens 2 angeordnet. Die Laufschuhe 20 und 21 bilden eine Verbindung des Mähbalkens 2 zu einem Untergrund. Aufgabe der Laufschuhe 20 und 21 ist es zu verhindern, dass der Mähbalken 2 in den Untergrund einsticht.

Die Funktionsweise des Motormähers 17 ist folgende:

Beim Einsatz des Motormähers 17 rollen die Laufräder 18 und 19 über das Schnittgut, insbesondere Gras. Dadurch wird das Schnittgut, insbesondere Gras nieder gehalten. Dadurch wird verhindert, dass sich das Schnittgut vor dem Mähbalken 2, insbesondere vor den Laufschuhen 20 und 21 sammelt, türmt und/oder häuft, so dass mit dem Mäher 17 das Schnittgut vor dem Mähbalken 2 hergeschoben wird.

**Bezugszeichenliste**

| | | | | | |
|---|---|---|---|---|---|
| 1 | Motormäher | 34 | | 67 | |
| 2 | Mähbalken | 35 | | 68 | |
| 3 | erste Radeinheit | 36 | | 69 | |
| 4 | zweite Radeinheit | 37 | | 70 | |
| 5 | Rahmen | 38 | | 71 | |
| 6 | Querträger | 39 | | 72 | |
| 7 | erster Haltearm | 40 | | 73 | |
| 8 | zweiter Haltearm | 41 | | 74 | |
| 9 | Endpunkt | 42 | | 75 | |
| 10 | Endpunkt | 43 | | 76 | |
| 11 | Achse | 44 | | 77 | |
| 12 | erstes Rad | 45 | | 78 | |
| 13 | zweites Rad | 46 | | 79 | |
| 14 | Gehäuse | 47 | | | |
| 15 | Verbindungselement | 48 | | | |
| 16 | Antrieb | 49 | | M | Mittelachse |
| 17 | Motormäher | 50 | | b | Breite |
| 18 | Laufrad | 51 | | α | Winkel |
| 19 | Laufrad | 52 | | | |
| 20 | Laufschuh | 53 | | | |
| 21 | Laufschuh | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Einachsiges Fahrzeug (1, 1.1), insbesondere für landwirtschaftliche Arbeiten, wie Mähen, Kreiseln und/oder Schwaden mit
einem Arbeitsgerät (2),
einer ersten Radeinheit (3) und
einer zweiten Radeinheit (4),
einem integrierten Steuergerät, wobei die Radeinheiten (3, 4) jeweils endseitig an dem einachsigen Fahrzeug angeordnet sind, wobei jede der Radeinheiten (3, 4) eine Basismaschine ist, geeignet zur selbstständigen Verwendung, wobei das Arbeitsgerät (2) zwei gleiche oder ähnliche Teilarbeitsgeräte (2.1, 2.2) umfasst, **dadurch gekennzeichnet dass** das Fahrzeug (1, 1.1) eine Breite (b) grösser 3,5 m aufweist, wobei die erste Radeinheit (3) das erste Teilarbeitsgerät (2.1) antreibt und die zweite Radeinheit (4) das zweite Teilarbeitsgerät (2.2) antreibt, wobei die erste Radeinheit (3) und die zweite Radeinheit (4) jeweils einen eigenen Antrieb aufweisen.

2. Einachsiges Fahrzeug nach Anspruch 1, **dadurch gekennzeichnet, dass** die Radeinheiten (3, 4) verschieblich an dem einachsigen Fahrzeug angeordnet sind.

3. Einachsiges Fahrzeug nach einem der Ansprüche 1 bis 3, **gekennzeichnet durch** das Steuergerät, geeignet zur Steuerung der ersten Radeinheit (3) und der zweiten Radeinheit (4).

4. Einachsiges Fahrzeug nach einem der vorhergehenden Ansprüche, **dadurch gekennzeichnet, dass** die erste Radeinheit (3) und/oder die zweite Radeinheit (4) eine eigene Einheit ist, die einzeln und/oder in Kombination mit einer Vielzahl von Arbeitsgeräten verwendet werden kann.

5. Einachsiges Fahrzeug nach einem der vorhergehenden Ansprüche, **gekennzeichnet durch** eine Lenkeinrichtung für einen Bediener.

6. Einachsiges Fahrzeug nach einem der vorhergehenden Ansprüche, **gekennzeichnet durch** einen Steuereinrichtung, geeignet zum Empfangen von Daten, Speichern eines Fahrprogramms und Steuern des Fahrzeugs in Abhängigkeit des Fahrprogramms und der Daten.

7. Einachsiges Fahrzeug nach einem der vorhergehenden Ansprüche **gekennzeichnet durch** ein Laufrad (18, 19), welches in Fahrtrichtung vor dem Arbeitsgerät (2) angeordnet ist.

## Claims

1. A single-axle vehicle (1, 1.1), in particular for agricultural work,
such as mowing, turning and/or windrowing, having
an implement (2),
a first wheel unit (3) and
a second wheel unit (4),
an integrated control unit,
wherein the wheel units (3, 4) are arranged in each case at the end on the single-axle vehicle, wherein each of the wheel units (3, 4) is a basic machine, suitable for independent use, wherein the implement (2) comprises two identical or similar partial implements (2.1, 2.2), **characterised in that** the vehicle (1, 1.1) has a width (b) greater than 3.5 m, wherein the first wheel unit (3) drives the first partial implement (2.1) and the second wheel unit (4) drives the second partial implement (2.2), wherein the first wheel unit (3) and the second wheel unit (4) each have a separate drive.

2. A single-axle vehicle according to Claim 1, **characterised in that** the wheel units (3, 4) are arranged displaceably on the single-axle vehicle.

3. A single-axle vehicle according to one of Claims 1 to 2, **characterised by** the control unit, suitable for controlling the first wheel unit (3) and the second wheel unit (4).

4. A single-axle vehicle according to one of the preceding claims, **characterised in that** the first wheel unit (3) and/or the second wheel unit (4) is a separate unit which can be used individually and/or in combination with a large number of implements.

5. A single-axle vehicle according to one of the preceding claims, **characterised by** a steering means for an operator.

6. A single-axle vehicle according to one of the preceding claims, **characterised by** a control device, suitable for receiving data, storing a driving program and controlling the vehicle as a function of the driving program and the data.

7. A single-axle vehicle according to one of the preceding claims **characterised by** a wheel (18, 19) which is arranged in the direction of travel ahead of the implement (2).

## Revendications

1. Véhicule à un seul essieu (1, 1.1), en particulier pour les travaux agricoles, tels que la moisson, le centrifugeage et/ou l'andainage, avec
un appareil de travail (2),
une première unité de roue (3) et
une deuxième unité de roue (4),
un appareil de commande intégré,
dans lequel les unités de roue (3, 4) sont disposées, chacune, du côté de l'extrémité sur le véhicule à un seul essieu, chacune des unités de roue (3, 4) étant une machine de base convenant pour une utilisation autonome, l'appareil de travail (2) comportant deux appareils de travail partiels identiques ou similaires (2.1, 2.2),
**caractérisé par le fait que** le véhicule (1, 1.1) présente une largeur (b) supérieure à 3,5 m, la première unité de roue (3) entraînant le premier appareil de travail partiel (2.1) et la deuxième unité de roue (4) entraînant le deuxième appareil de travail partiel (2.2), la première unité de roue (3) et la deuxième unité de roue (4) présentant, chacune, leur propre entraînement.

2. Véhicule à un seul essieu selon la revendication 1, **caractérisé par le fait que** les unités de roue (3, 4) sont disposées de manière déplaçable sur le véhicule à un seul essieu.

3. Véhicule à un seul essieu selon l'une des revendications 1 à 2, **caractérisé par** l'unité de commande convenant pour commander la première unité de roue (3) et la deuxième unité de roue (4).

4. Véhicule à un seul essieu selon l'une des revendications précédentes, **caractérisé par le fait que** la première unité de roue (3) et/ou la deuxième unité de roue (4) est une unité distincte pouvant être utilisée individuellement et/ou en combinaison avec une pluralité d'appareils de travail.

5. Véhicule à un seul essieu selon l'une des revendications précédentes, **caractérisé par** un dispositif de direction pour un opérateur.

6. Véhicule à un seul essieu selon l'une des revendications précédentes, **caractérisé par** un dispositif de commande convenant pour recevoir des données, pour mémoriser un programme de conduite et pour commander le véhicule en fonction du programme de conduite et des données.

7. Véhicule à un seul essieu selon l'une des revendications précédentes, **caractérisé par** une roue porteuse (18, 19) qui est disposée, dans la direction de déplacement, devant l'appareil de travail (2).
